# FASCICULE DE BREVET EUROPEEN

(11) **EP 3 674 577 B1**
(45) Date de publication et mention de la délivrance du brevet: **17.11.2021**
(21) Numéro de dépôt: 19217648.5
(22) Date de dépôt: 18.12.2019
(51) Int. Cl.: F16D 51/22, F16D 51/50, F16D 65/22

(54) **ACTIONNEUR POUR FREIN A TAMBOUR ELECTROMECANIQUE PRESENTANT UNE ROBUSTESSE AUGMENTEE**
STELLGLIED FÜR ELEKTROMECHANISCHE TROMMELBREMSE MIT ERHÖHTER WIDERSTANDSFÄHIGKEIT
ACTUATOR FOR ELECTROMECHANICAL BRAKE DRUM WITH INCREASED STURDINESS

(30) Priorité: 27.12.2018 FR 1874241
(43) Date de publication de la demande: 01.07.2020
(73) Titulaire: Hitachi Astemo France, 93700 Drancy (FR)
(72) Inventeur: BOURLON, Philippe, 77230 DAMMARTIN EN GOËLE (FR); DUPAS, Christophe, 44210 PORNIC (FR); CUBIZOLLES, Cyril, 93700 DRANCY (FR)
(74) Mandataire: Brevalex

(56) Documents cités:
- EP-A2- 3 089 901
- WO-A2-2005/070736
- WO-A2-2015/082205
- WO-A2-2015/101611
- DE-A1- 19 858 642

## Description

### DOMAINE TECHNIQUE ET ÉTAT DE LA TECHNIQUE ANTÉRIEURE

La présente invention se rapporte à un actionneur pour frein à tambour électromécanique présentant une robustesse augmentée.

Dans la plupart des automobiles actuelles, le frein de service est assuré par des freins à disques et/ou des freins à tambour.

Ils assurent la fonction de freinage de service, visant à ralentir, voire arrêter, le véhicule automobile. La fonction de frein de parking ou de stationnement visant à immobiliser un véhicule à l'arrêt et la fonction de frein de secours sont généralement obtenues avec le système assurant le frein de parking.

L'application du frein de parking peut être obtenue en tirant sur un levier disposé dans l'habitacle qui est relié à un mécanisme situé dans un frein à tambour ou un frein à disque, par l'intermédiaire d'un câble de frein. Le mécanisme tend à écarter les segments de freinage des freins à tambour pour les appliquer contre les tambours. Dans le cas d'un frein à disque, les plaquettes sont serrées sur le disque de frein.

Pour améliorer le confort du conducteur et la sécurité d'application du freinage de parking, l'industrie automobile a développé un frein de parking électrique.

Par exemple, un actionneur muni d'un moteur électrique est disposé au moins sur chaque frein arrière, et provoque le serrage des freins.

Le conducteur appuie par exemple sur un bouton disposé sur le tableau de bord pour activer le freinage de parking électrique.

Les systèmes de frein de parking électrique comportent des moteurs électriques à courant continu, la mise en œuvre de tels moteurs étant recommandée par exemple par l'association allemande de l'industrie automobile dans ses « VDA Recommandation ».

Dans le cas d'un frein à disque, c'est en général le piston qui est déplacé par l'actionneur et qui vient appliquer les plaquettes de frein contre le disque de frein. Dans le cas d'un frein à tambour, l'actionneur est par exemple disposé entre les segments de frein et sert de point fixe lors de l'application d'un freinage de service par l'intermédiaire d'un cylindre de roue. L'actionneur est par exemple du type vis-écrou et écarte les segments. L'actionneur comporte deux pistons qui sont en appui contre les segments de frein. Le déplacement des pistons en éloignement l'un de l'autre provoque l'application des segments contre le tambour. Les pistons sont configurés pour être mobiles en translation et fixes en rotation.

En général l'un des pistons est formé par la vis qui est bloquée en rotation et l'autre piston est porté par l'écrou et est libre en rotation par rapport à celuici. Lors d'une phase d'activation du frein de parking, l'écrou est entraîné en rotation par le moteur électrique, il se déplace en translation, provoquant l'écartement des deux pistons l'un de l'autre.

La mesure du courant et/ou la tension aux bornes du moteur électrique permet de connaître l'état du frein serré. En effet, lorsque le frein est serré, puisque l'écrou est solidaire en translation du deuxième piston, un effort s'oppose au déplacement de l'écrou, ce qui génère une augmentation de courant et/ou de la tension aux bornes du moteur activant l'actionneur. Ce pic de consommation correspond à un état serré du frein de parking.

En phase de relâchement du frein de parking, l'écrou tourne en sens inverse et provoque le rapprochement des pistons. En outre, une face d'extrémité de l'écrou se rapproche d'un fond du boîtier de l'actionneur, jusqu'à entrer en contact brutale avec celle-ci. Ceci peut détériorer l'actionneur après un grand nombre de cycles. En outre, le courant consommé augmente brutalement lors du contact, le carter étant très rigide, mais l'unité de commande n'est pas capable d'arrêter instantanément le moteur électrique. Par conséquent le risque d'endommagement est encore augmenté.

Par ailleurs, on souhaite pouvoir vérifier que le frein de parking est effectivement relâché, l'information de contact entre l'écrou et le carter fournit cette information sans requérir de capteur supplémentaire spécifique. On souhaite conserver cette information tout en évitant un contact brutal.

Le document WO 2015/082205 décrit un frein à tambour à actionnement électromécanique.

### EXPOSÉ DE L'INVENTION

C'est par conséquent un but de la présente invention d'offrir un actionneur pour frein à tambour électromécanique permettant la détection d'un état de relâchement du frein et présentant une durée de vie augmentée.

Le but énoncé ci-dessus est atteint par un actionneur pour frein à tambour électromécanique comportant un boîtier, deux pistons destinés à appliquer chacun un élément de friction contre le tambour solidaire d'une roue, les pistons étant configurés pour se déplacer au moins en translation. L'actionneur comporte un système d'entraînement disposé dans un boîtier de l'actionneur, le système d'entraînement est activé par un moteur électrique, et met en mouvement les pistons. Le système d'entrainement comporte des moyens de butée élastique configurés pour s'interposer entre le système d'entrainement et le boîtier de l'actionneur à la fin de la phase de défreinage, lorsque le frein est effectivement desserré.

Ainsi le contact entre le boîtier de l'actionneur et le système d'entraînement est amorti, ce qui réduit les risques d'endommagement de l'actionneur. Puisque l'effort s'opposant au système d'entraînement croît progressivement du fait de la déformation élastique de la butée, il en résulte une augmentation progressive du courant électrique, l'unité de commande a alors le temps de détecter cette variation de consommation de courant et de générer un ordre d'arrêter le moteur électrique avant un contact entre l'enveloppe et le boîtier.

On dispose toujours de l'information de relâchement du freinage tout en réalisant un actionneur plus robuste ayant une durée de vie augmentée

Dans un premier mode de réalisation, la butée élastique applique une force orientée transversalement par rapport à l'axe longitudinal.

Dans un exemple de réalisation, c'est une extrémité longitudinale de l'élément élastique préchargé qui vient en appui contre le boîtier de l'actionneur. Ainsi le nombre de pièces de l'actionneur est inchangé.

Dans un autre exemple, un élément élastique supplémentaire est ajouté, ce qui permet d'avoir une raideur au niveau du contact avec le boîtier, ajustable par rapport à la raideur de l'élément élastique préchargé.

Dans un autre mode de réalisation, la butée élastique comporte un piston monté coulissant par exemple dans l'écrou et comportant une extrémité longitudinale en contact avec un élément élastique préchargé et une autre extrémité destinée à venir en contact avec le boîtier lors du défreinage. L'élément élastique s'oppose au déplacement du piston, ce qui assure un effort croissant s'opposant au déplacement de l'écrou et une augmentation progressive de la consommation du courant par le moteur électrique détectable par l'unité de commande.

En d'autres termes, on introduit dans l'actionneur une butée élastique active au-delà d'une certaine course de défreinage, évitant ainsi un choc brutale et permettant une augmentation progressive du courant consommé et offrant un lapse de temps d'une durée suffisante à l'unité de commande pour arrêter le moteur et éviter une dégradation de l'actionneur.

La présente invention a alors pour objet un actionneur pour frein à tambour électromécanique, ledit frein à tambour comportant au moins deux organes de friction destinés à venir en contact avec un tambour solidaire en rotation de la roue, ledit actionneur étant destiné à appliquer lesdits organes de friction contre ledit tambour, ledit actionneur comportant un boîtier s'étendant selon une direction longitudinale, au moins deux pistons, chaque piston étant destiné à exercer un effort sur un organe de friction pour l'appliquer contre le tambour, lesdits pistons étant montés coulissant dans des passages traversants du boîtier le long de la direction longitudinale, l'actionneur comportant également un système d'entraînement monté dans le boîtier et destiné à écarter les piston l'un de l'autre lors d'une phase de freinage et à les rapprocher l'une de l'autre lors d'une phase de défreinage, ledit système d'entraînement comportant un ensemble vis-écrou et au moins un élément déformable élastiquement monté préchargé entre deux pièces mobiles en translation l'une par rapport à l'autre le long de la direction longitudinale, ledit système comportant des première et deuxième faces d'extrémité longitudinales en regard chacune d'un premier et deuxième fond longitudinal du boîtier. Le système d'entraînement comporte également des moyens d'interposition disposés de sorte à s'interposer entre le système d'entraînement et le premier fond longitudinal du boîtier, lesdits moyens d'interposition étant configurés pour qu'en fin de phase de défreinage, ils entrent en contact avec la premier fond longitudinal du boîtier et forment une butée élastique avec la premier fond longitudinal du boîtier.

Par exemple, les moyens d'interposition sont disposés de sorte à s'interposer entre au moins la première face d'extrémité du système d'entraînement et le premier fond longitudinal du boîtier.

Dans un exemple de réalisation, le système d'entraînement comporte un écrou, une vis et un troisième élément, un manchon solidaire en rotation et en translation de l'écrou et du troisième élément, l'élément déformable élastiquement étant monté en réaction entre l'écrou et le troisième élément, et l'un des pistons est porté par l'écrou et l'autre piston est porté par le troisième élément.

Par exemple, moyens d'interposition exercent un effort s'opposant au déplacement du système d'entraînement, ledit effort étant orienté sensiblement transversalement à la direction longitudinale.

Dans un exemple de réalisation, les moyens d'interposition comportent une extrémité longitudinale d'un organe déformable élastiquement en saillie de la première face d'extrémité du système d'entraînement, et le premier fond longitudinal comporte une face parallèle à la direction longitudinale contre laquelle l'extrémité longitudinale en saillie de l'organe déformable élastiquement est destinée à venir en contact en fin de phase de freinage.

La première face d'extrémité du système d'entraînement peut comporter une fenêtre s'étendant angulairement, ladite fenêtre étant traversée par l'extrémité longitudinale de l'organe déformable élastiquement, et la fenêtre est délimitée angulairement par un premier bord et un deuxième bord, l'organe déformable élastiquement étant orienté de sorte qu'en fin de phase de freinage, lorsque l'extrémité longitudinale de l'organe déformable élastiquement est en contact avec la face du premier fond longitudinal, l'extrémité longitudinale de l'organe déformable élastiquement se déplace du premier bord vers le deuxième bord augmentant la charge de l'organe déformable élastiquement.

Dans un exemple, l'élément déformable élastiquement est avantageusement un ressort hélicoïdal et forme l'organe déformable élastiquement, distinct de l'élément déformable.

En variante, l'organe déformable élastiquement est un deuxième ressort hélicoïdal distinct de l'élément déformable élastiquement et est monté dans un logement formé dans l'écrou.

Le deuxième ressort hélicoïdal est de préférence immobilisé en rotation dans l'écrou.

Dans un autre exemple de réalisation, les moyens d'interposition (exercent un effort s'opposant au déplacement du système d'entraînement, ledit effort étant orienté sensiblement selon la direction longitudinale.

Les moyens d'interposition peuvent comporter au moins un pion faisant saillie de la première face d'extrémité du système d'entraînement et monté apte à coulisser dans ladite première face, ledit pion étant monté en réaction contre un deuxième organe déformable élastiquement de sorte qu'une force de rappel s'exerce à l'encontre du pion en direction de l'extérieur du système d'entrainement.

Le deuxième organe déformable élastiquement est par exemple formé par l'élément déformable élastiquement.

La présente invention a également pour objet un frein à tambour comportant un tambour, un plateau, deux segments, un moteur électrique, un actionneur selon l'invention, l'actionneur étant fixé sur le plateau et entrainé par le moteur électrique.

Le frein à tambour comporte avantageusement une unité de commande comportant des moyens de commande de l'alimentation du moteur électrique et des moyens pour mesurer la consommation électrique du moteur électrique, lesdits moyens de commande étant configurés pour arrêter l'alimentation du moteur électrique, lorsque la consommation électrique dépasse une valeur donnée au moins en phase de relâchement du frein. L'unité de commande est avantageusement être configurée pour arrêter le moteur électrique en cas de dépassement d'une valeur donnée de la consommation de courant au moins en phase de relâchement du frein.

L'actionneur peut être configuré pour appliquer au moins un freinage de parking, et el le frein peut comporter un autre actionneur pour appliquer un freinage de service.

### BRÈVE DESCRIPTION DES DESSINS

La présente invention sera mieux comprise sur la base de la description qui va suivre et des dessins en annexe sur lesquels:
La figure 1 est une vue en coupe longitudinale d'un premier exemple d'un actionneur selon un premier mode de réalisation,
La figure 2 est une vue en perspective d'un système d'entraînement interne à l'actionneur de la figure 1,
La figure 3 est une vue identique à celle de la figure 2 sans l'enveloppe,
Les figures 4A à 4C sont des vues en perspective des différents éléments représentés seuls,
La figure 5 est une vue en perspective d'un système d'entraînement interne d'un deuxième exemple d'actionneur selon le premier mode de réalisation,
La figure 6 est une vue en perspective du système de la figure 5 selon un autre point de vue,
La figure 7 est une vue proche de celle de la figure 6 sans l'enveloppe,
Les figures 8A et 8B sont des vues en perspective des différents éléments représentés seuls,
La figure 9 est une vue en coupe longitudinale d'un détail de l'actionneur selon le deuxième exemple de réalisation au niveau de la butée entre l'élément élastique et le boîtier de l'actionneur,
La figure 10 est une vue en coupe longitudinale d'un détail d'un exemple d'un actionneur selon un deuxième mode de réalisation,
Les figures 11A et 11B sont des représentations graphiques de la variation de la consommation de courant i en Ampère en fonction du temps t en s du moteur électrique d'un actionneur selon l'invention et d'un actionneur de l'état de la technique respectivement,
La figure 12 est une vue en perspective d'un exemple de frein à tambour à frein de parking électrique auquel s'applique l'actionneur selon l'invention.

### EXPOSÉ DÉTAILLÉ DE MODES DE RÉALISATION PARTICULIERS

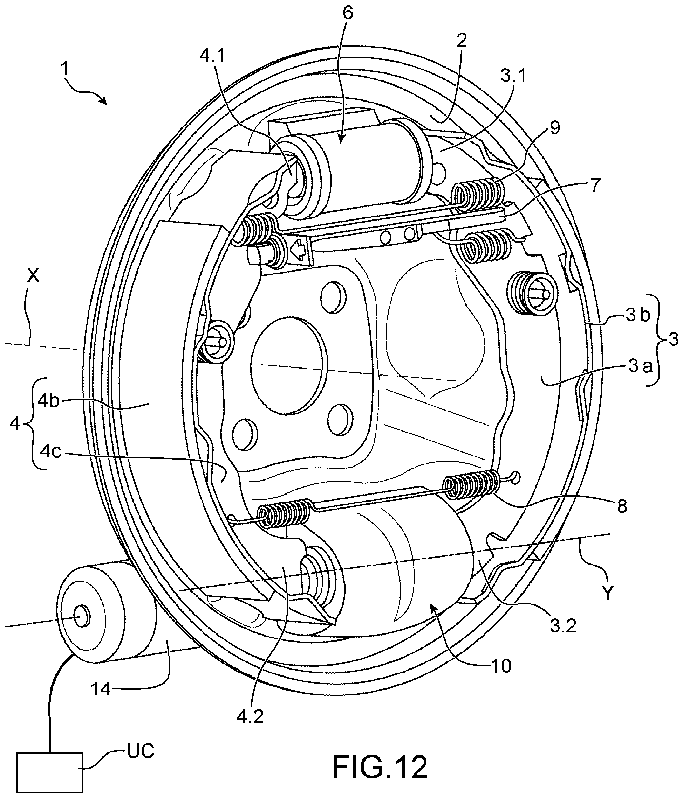

Sur la figure 12, on peut voir un frein à tambour 2 "bi-mode" dans un exemple de mode de réalisation de l'invention.

Le frein à tambour 1 comporte un tambour (non représenté) solidaire en mouvement de la roue (non représenté), un plateau 2 de révolution d'axe X équipé d'un premier et d'un second segment en arc de cercles 3 et 4 mobiles radialement pour pouvoir être pressés contre la face interne cylindrique d'un tambour non représenté.

Les segments 3 et 4 comportent chacun une âme 3a, 4a en tôle plane en forme de portion de couronne circulaire qui porte une garniture de freinage 3b, 4b, et sont montés diamétralement opposés avec leurs extrémités en appui à fois sur un cylindre de roue 6 hydraulique et sur un actionneur mécanique 10 portés par le plateau 2. Ces segments 3 et 4 sont en outre rappelés l'un vers l'autre par deux ressorts de rappel 8 et 9, et plaqués contre le plateau 2 chacun par un ressort dit de latéral.

Une biellette de rattrapage d'usure 7 s'étend le long du cylindre de roue 6 en ayant une première extrémité en appui sur l'âme 3a du premier segment 3 et une seconde extrémité en appui sur l'âme 4a du second segment 4 lorsque le frein est au repos.

Le cylindre de roue 6 est destiné à être actionné lors d'une utilisation du frein à tambour 1 selon un premier mode de fonctionnement dit "simplex", qui assure un freinage progressif particulièrement adapté pour freiner le véhicule en service. Il comprend une chambre hydraulique fermée à ses extrémités par deux pistons qui s'écartent l'un de l'autre lorsque la pression hydraulique augmente et pousse les extrémités associées des segments 3 et 4.

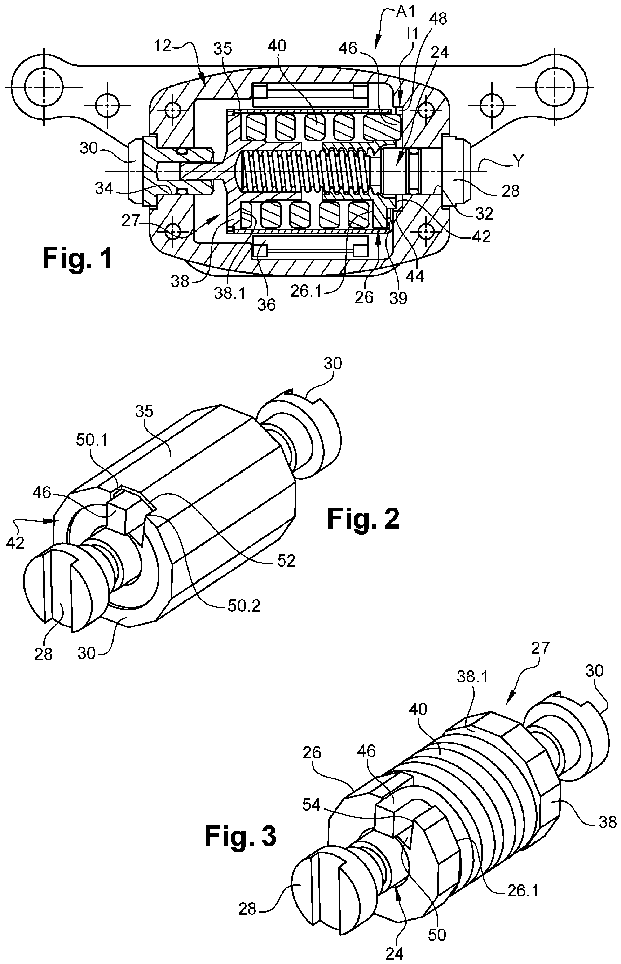

L'actionneur mécanique 10 assure, quant à lui, le freinage de stationnement ou de parking et de secours en écartant les extrémités associées des segments pour assurer un blocage rapide et puissant des roues du véhicules selon un mode de fonctionnement dit "duo-servo", notamment quand le cylindre de roue 6 est inactif. Cet actionneur est entrainé par un moteur électrique 14. Dans l'exemple représenté, le cylindre de roue comporte deux pistons opposés, qui actionnent chacun l'un des segments 3, 4 en écartant l'une de l'autre leurs deux extrémités 3.1, 4.1 en vis-àvis, c'est-à-dire celles situées d'un même côté de l'axe de rotation X, ici appelées "extrémités mobiles" et situées en haut de la figure 3. A son extrémité opposée, dite extrémité de butée, chaque segment s'appuie sur le plateau 2 par un élément d'ancrage solidaire du plateau, et formant ainsi une butée pour ce segment. L'élément d'ancrage transmet au moins en partie le couple de freinage entre segments et plateau. L'élément d'ancrage des deux segments est réalisé par l'actionneur 10.

L'actionneur 10 s'étend le long d'un axe Y perpendiculaire à l'axe X du plateau et parallèle au plateau. Il comporte un boîtier 12 fixé sur plateau 2 du côté de la première face. Le boîtier 12 comporte un logement s'étendant le long de l'axe Y et débouchant aux deux extrémités longitudinales du boîtier 12. Un ensemble d'entraînement est logé dans le boîtier 12.

Le frein à tambour comporte également un dispositif d'entraînement 14 de l'actionneur, fixé sur la face du plateau opposée à la face du côté de laquelle est monté l'actionneur 10.

Le dispositif d'entraînement est un moteur électrique qui peut être associé ou non à un réducteur.

Un passage (non visible) est pratiqué à travers le plateau 4 pour permettre la transmission de l'entraînement du dispositif d'entraînement à l'ensemble d'entraînement de l'actionneur 10.

Sur la figure 1, on peut voir une vue en coupe longitudinale d'un premier exemple de réalisation de l'actionneur A1, et sur les figures 2 et 3 on peut voir un ensemble de l'actionneur disposé dans le boîtier de l'actionneur.

L'actionneur comporte deux pistons 28, 30 destinés chacun à venir en contact avec un segment de frein.

L'ensemble d'entraînement de l'actionneur est du type vis-écrou et forme une cartouche montée dans le boîtier de l'actionneur. Il comporte un premier élément 24 muni d'un filetage et formant vis, et dont la tête forme l'un des pistons 28, un deuxième élément 26 muni d'un taraudage formant un écrou et un troisième élément 27 portant l'autre piston 30.

Le troisième élément 27 est destiné à se déplacer en rotation et en translation sous l'action du moteur électrique. L'autre piston 30 est monté solidaire en translation du troisième élément 27 sur une extrémité longitudinale en forme de tige du troisième élément 27 et libre en rotation par rapport au troisième élément 27 autour de l'axe longitudinal Y.

De manière avantageuse, les pistons 28, 30 sont guidés en translation directement par les parois de passages 32, 34 respectivement formés dans des premier et deuxième fonds longitudinaux du boîtier de l'actionneur.

Un manchon 35 destiné à transmettre la rotation du moteur à l'écrou 26. Le manchon 35 est de forme tubulaire et est monté autour de l'écrou 26 et du troisième élément 27 formant poussoir. Le troisième élément est solidaire en rotation et en translation du manchon 35 et l'écrou 26 est solidaire en rotation du manchon 35. Dans l'exemple représenté, le manchon présente une section transversale polygonale coopérant avec un passage intérieur de frome correspondante d'une roue dentée extérieurement 36 et entrainée par le moteur électrique.

Par exemple le manchon 35 est serti par une extrémité longitudinale sur un bord extérieur d'une saillie radiale 38 du troisième élément et comporte au niveau de son autre extrémité longitudinale un rebord 39 replié radialement vers l'intérieur, délimitant un passage pour le piston 28 et formant une butée longitudinale pour l'écrou 26.

Dans l'exemple représenté, les contours extérieurs de la section transversale de la saillie radiale 38 du troisième élément 27 et la section transversale de l'écrou 26 sont polygonaux, par exemple dodécagonaux et coopèrent avec le manchon 35 assurant une solidarisation en rotation entre le manchon 35, le troisième élément 27 et l'écrou.

L'ensemble d'entraînement comporte également un moyen déformable élastiquement 40 selon l'axe du mouvement d'actionnement, dit élément élastique, aussi appelé "spring pack" en anglais pour fournir la fonction de stabilisation des efforts dans la chaîne d'appui. Dans cet exemple de réalisation, cet élément élastique 40 est un ressort hélicoïdal monté préchargé entre une face d'appui 26.1 de l'écrou 26 et un face 38.1 de la saillie radiale 38 du troisième élément 27 en regard de la face d'appui de l'écrou 26

Le manchon assure la précharge du ressort 40 en fixant la distance longitudinale maximale entre la face d'appui de l'écrou et la face en regard de la saillie radiale 38.

En fonction des efforts transmis sur la direction de déplacement de l'actionneur, cet élément élastique présente une raideur déterminée pour fournir une course permettant de maintenir ou rétablir un appui suffisant des segments contre le tambour dans différentes circonstances ou changements de situations.

En particulier, cet élément élastique est ainsi susceptible d'emmagasiner, par compression dans l'ensemble d'actionnement lors d'une activation de l'actionneur alors que le dispositif est dans la première position de freinage, une quantité d'énergie mécanique suffisante pour maintenir ou amener le dispositif dans la deuxième position de freinage si l'appui du cylindre de frein 6 est interrompu après une activation de l'actionneur 10 sans nécessiter d'activer à nouveau l'actionneur.

Une telle situation se produit par exemple lorsque le conducteur arrête le véhicule et le maintient arrêté à l'aide du frein de service, puis enclenche le frein de stationnement avant de relâcher la commande du frein de service, par exemple lors d'un arrêt pour stationnement dans une pente. Cette réserve élastique permet de combler les courses qui sont nécessaires au passage d'une position de freinage à l'autre, par exemple du mode simplex au mode duo servo, tout en assurant une charge suffisante pour satisfaire aux besoins de l'immobilisation du véhicule.

L'actionneur comporte également des moyens d'interposition I1 destinés à venir s'interposer, au moins temporairement, entre une première face d'extrémité longitudinale 42 du système d'entrainement et une premier fond longitudinal 44 du boîtier en regard et à assurer un contact amorti entre le système d'entraînement et le premier fond longitudinal 44.

Dans le premier exemple de réalisation, les moyens d'interposition I1 comportent une extrémité longitudinale 46 du ressort 40 qui fait saillie de la face d'extrémité longitudinale 42 du système d'entraînement, et le premier fond longitudinal 44 comporte un portion 48 parallèle à l'axe longitudinal Y, contre laquelle vient en appui l'extrémité longitudinale en saillie 46 du ressort en fin de phase de freinage.

Dans cet exemple, la face d'extrémité longitudinale 42 comporte une fenêtre angulaire 50 traversée par l'extrémité longitudinale 46 du ressort 40. La fenêtre est formée par deux découpes 52, 54 formées chacune dans le rebord 39 du manchon et dans l'écrou 26, les deux découpes étant au moins en partie alignées.

La fenêtre 50 est délimitée angulairement par deux bords 50.1, 50.2. En l'absence de contact avec la portion 48, l'extrémité longitudinale est en appui contre un bord 50.1 de la fenêtre. De préférence, les deux bords 50.1, 50.2 forment un angle suffisant pour permettre à l'unité de commande de détecter l'augmentation du courant, et arrêter le moteur avant que l'extrémité longitudinale du ressort vienne en appui contre le bord 50.2. Par exemple l'angle est compris entre 10° et 30°.

Comme on peut le voir sur la figure 3, le ressort en appui par une spire d'extrémité contre l'écrou 26 et l'extrémité libre de la spire d'extrémité est repliée transversalement par rapport à la spire et traverse la fenêtre 50.

Le fonctionnement de l'actionneur va maintenant être décrit. On suppose que les garnitures de frein ne sont pas en contact avec le tambour.

En phase de freinage de parking, l'unité de commande envoie un ordre au moteur d'activer l'actionneur pour appliquer les garnitures de frein contre le tambour. Le moteur met en rotation dans un premier sens le manchon 35 via la couronne dentée et éventuellement un réducteur. Le manchon entraîne en rotation l'écrou dans un sens de dévissage de la vis, provoquant le déplacement des premier et deuxième pistons vers l'extérieur du boîtier, déplaçant les garnitures de frein vers l'extérieur et les appliquant contre le tambour.

En phase de défreinage, lorsqu'un ordre de relâcher le frein de parking est reçu par l'unité de commande, le moteur électrique met en rotation dans un deuxième sens le manchon, ce qui met en rotation l'écrou dans un sens de vissage de la vis, qui se déplace vers l'intérieur du boîtier, les deux pistons se rapprochent l'un vers l'autre. Du fait des moyens de rappel, les garnitures sont écartées du tambour.

Lors de cette phase de défreinage, la face d'extrémité longitudinale du système d'entraînement se rapproche du premier fond longitudinal 44 du boîtier. Il est à noter que le ressort 40 tourne avec le manchon 35, l'écrou 26 et la troisième pièce 27. Son extrémité longitudinale en saillie est en appui contre le rebord 50.1 de la fenêtre 50.

En fin de phase de défreinage, l'extrémité longitudinale en saillie du ressort vient en contact avec la face 48 du premier fond 44. L'autre bord 50.2 de la fenêtre est orienté de sorte que, lorsque l'extrémité longitudinale en saillie du ressort est en contact avec la face 48 et que le manchon et l'écrou sont encore entraînés en rotation, l'extrémité longitudinale du ressort se rapproche du bord 50.2. En outre le sens d'enroulement du ressort est tel que, lors de ce rapprochement, les spires se rapprochent générant un effort élastique s'opposant à ce rapprochement. Il en résulte un contact amorti entre le système d'entraînement et le boîtier et non un contact brutal qui a lieu dans les actionneurs de l'état de la technique.

En outre, cet effort se traduit par une augmentation du courant i consommé par le moteur comme cela est représenté sur le graphique 11A. L'effort élastique s'opposant au rapprochement croît progressivement, la consommation de courant croît donc également progressivement. L'unité de commande détecte cette augmentation de la consommation de courant, traduit celle-ci comme correspondant à un état desserré du frein à tambour et génère un ordre d'arrêter le moteur électrique. Par exemple, lorsque la valeur du courant consommé dépasse une valeur seuil V, l'unité de commande considère que le frein est relâché et que le moteur peut être arrêté.

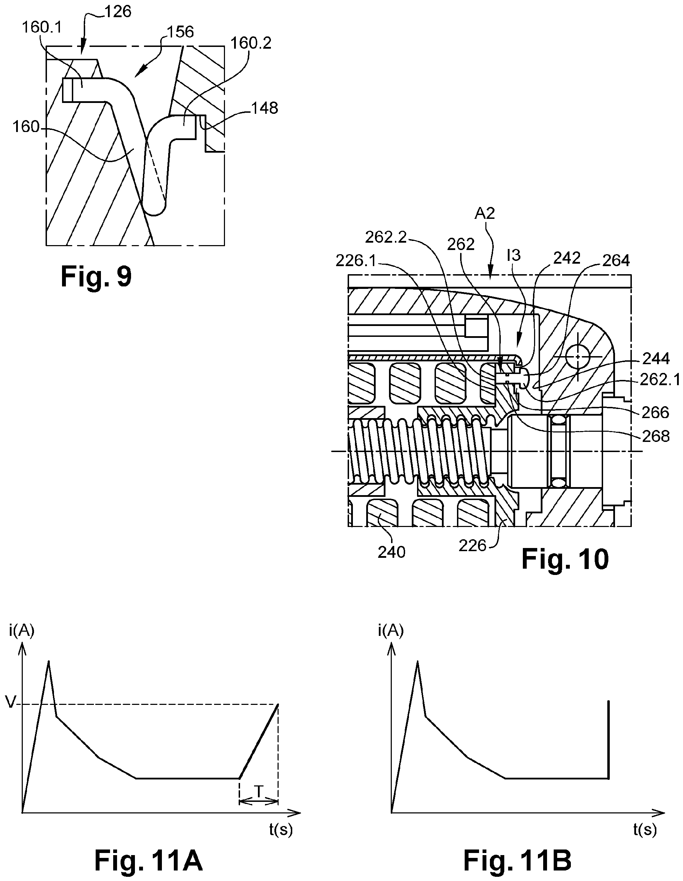

La consommation du courant augmentant progressivement, l'unité de commande bénéficie d'un certain temps T pour détecter cette augmentation et arrêter le moteur. A titre de comparaison sur la figure 11B on peut voir la variation de courant dans un actionneur de l'état de la technique lorsque le système d'entraînement vient en directement en contact par une face avec le boîtier. Le contact est brutal et l'augmentation de la consommation est instantanée, l'unité de commande n'a pas le temps d'arrêter le moteur. L'actionneur peut être détérioré après plusieurs cycles.

Grâce à l'invention l'actionneur est très robuste et présente une durée de vie allongée. Par exemple les inventeurs ont déterminé qu"il pouvait fonctionner pendant environ 250000 cycles pour un moment de force de valeur maximale 2 N.m.

En variante, l'extrémité longitudinale en saillie du ressort n'est pas montée dans une fenêtre mais est repliée de sorte que ce soit elle qui se déforme pendant l'appui sur la portion 48.

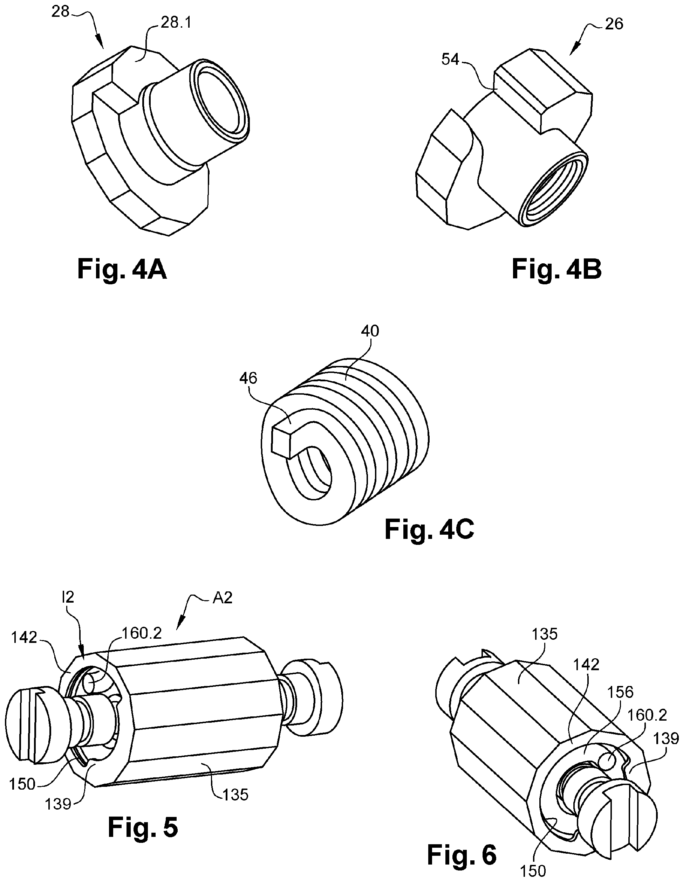

Sur les figures 5 à 9, on peut voir un deuxième exemple de réalisation d'un actionneur présentant une butée élastique.

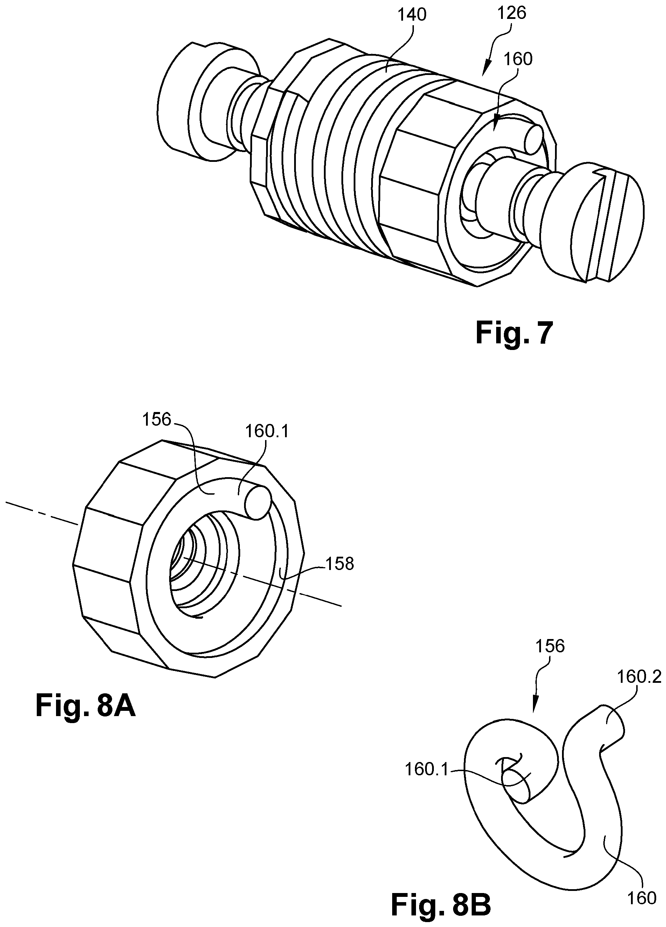

L'actionneur A2 se distingue de l'actionneur A1 en ce que les moyens d'interposition I2 ne sont pas formés par une extrémité longitudinale du ressort du spring package, mais par une extrémité d'un deuxième élément déformable élastiquement 156 qui est reçu dans un logement 158 de l'écrou 126 débouchant vers le premier fond 142 du boîtier (figure 8A). Le deuxième élément déformable élastique 156 est représenté seul sur la figure 8B. Il comporte par exemple une seule spire 160 et deux extrémités 160.1, 160.2 repliés par rapport à la direction de la spire. Une extrémité 160.1 est ancrée dans le fond du logement 158 de l'écrou évitant à la spire de tourner dans le logement, et l'autre extrémité 60.2 fait saillie de la face longitudinale d'extrémité 142 à travers une fenêtre 150 traversant le rebord 139 du manchon 135.

Le fonctionnement de l'actionneur A2, en particulier des moyens d'interposition, est similaire à celui de l'actionneur A1, et ne sera pas répété. Sur la figure 9, on peut voir une vue en coupe schématique de l'actionneur au niveau du deuxième moyen élastique montrant l'extrémité repliée 160.1 ancrée dans le fond du logement l'extrémité repliée 160.2 en appui contre la portion 148 (figure 9) en fin de phase de défreinage.

Cet exemple de réalisation présente l'avantage de pouvoir choisir la raideur de la butée élastique indépendamment de celle du spring package. Il offre donc une plus grande liberté dans la conception de l'actionneur.

Sur la figure 10, on peut voir une représentation schématique partielle d'exemple d'actionneur A3 selon un deuxième mode de réalisation.

Dans cet exemple de réalisation, les moyens d'interposition I3 comportent au moins un pion 262 monté coulissant dans un passage traversant l'écrou 226 s'étendant dans direction longitudinale. Le pion 262 comporte une première extrémité longitudinale 262.1 faisant saillie de la face d'extrémité 242 du système d'entraînement et en regard du premier fond 244 du boîtier, et une deuxième extrémité longitudinale 262.2 en saillie de la face d'appui 228.1 de l'écrou contre laquelle s'appuie le ressort 240. La deuxième extrémité longitudinale 262.2 est en appui contre le ressort, plus particulièrement contre une spire d'extrémité du ressort en appui contre l'écrou.

Dans l'exemple représenté, le pion 262 comporte une tête 264 destinée à entrer en contact avec le premier fond 244 du boîtier. La tête 264 comporte une saillie annulaire 266 destinée à venir en appui contre la face de l'écrou.

Le fonctionnement de l'actionneur est le suivant.

La phase d'application du frein de parking a lieu de manière similaire à celle avec l'actionneur A1.

Lors d'une phase de défreinage, la face d'extrémité 242 du système d'entraînement se rapproche du premier fond 244 du boîtier, jusqu'à ce que la tête 264 entre en contact avec celle-ci. Le pion 262 coulisse dans le passage et le ressort exerce un effort à l'encontre du coulissement du pion 262. Le contact est donc amorti. L'augmentation de la consommation du courant par le moteur est similaire à celle représenté sur la figure 11A.

Le rebord 240 du manchon présente une fenêtre pour le passage de la tête 264. En position de freinage, la collerette 266 est décollée de l'écrou sous l'action du ressort.

De manière avantageuse, le coulissement du pion 262 dans le passage est étanche. Un joint, par exemple un joint torique 268, est monté entre le pion et le passage.

Selon une variante, plusieurs pions sont répartis dans l'écrou assurant un appui uniforme entre le système d'entraînement et l'extrémité longitudinale interne, par exemple trois pions sont disposés à 120° les uns des autres sont prévus.

Selon une autre variante, le pion est monté transversalement et vient en appui contre une portion parallèle à l'axe longitudinal similaire à la portion 48. Dans cette variante, un élément de rappel élastique peut être mise en mis en œuvre.

En variante encore, le système d'entraînement comporte un deuxième élément déformable élastiquement monté par exemple dans l'écrou et ne servant que pour la butée élastique, de manière similaire à l'actionneur des figures 5 à 9. Par exemple, un ensemble sou forme de cartouche comportant le pion et le ressort est monté dans l'écrou.

En variante encore, le ou les pions est ou sont monté(s) dans la saillie radiale du troisième élément.

### Références

- 1: frein à tambour
- 2: plateau
- 3: premier segment
- 3.1: extrémité du premier segment
- 4: second segment
- 4.1: extrémité du second segment
- 3a, 4a: âmes
- 3b, 4b: garnitures de freinage
- 6: cylindre de roue hydraulique
- 7: biellette de rattrapage d'usure
- 8, 9: ressorts de rappel
- 10: actionneur
- 12: boîtier de l'actionneur
- 14: dispositif d'entraînement
- 24: premier élément
- 26, 126, 226: écrou
- 26.1, 226.1: face d'appui de l'écrou
- 27: troisième élément
- 28: premier piston
- 30: deuxième piston
- 32, 34: passages
- 35, 135: manchon
- 36: roue dentée
- 38: saillie radiale
- 38.1: face de la saillie radiale 38
- 39, 139: rebord du manchon
- 40, 140, 240: élément déformable élastiquement
- 42, 142, 242: première face d'extrémité
- 44, 244: premier fond longitudinal
- 46: extrémité longitudinal de l'élément déformable élastiquement
- 48 148: face du premier fond longitudinal
- 50: fenêtre
- 50.1: premier rebord
- 50.2: deuxième rebord
- 52: découpe dans le rebord 39

- 54: découpe dans l'écrou 26
- 156: deuxième élément déformable élastiquement
- 158: logement dans l'écrou
- 160: spire
- 160.1: première extrémité de la spire
- 160.2: deuxième extrémité de la spire
- 262: pion
- 262.1: première extrémité longitudinale
- 262.2: deuxième extrémité longitudinale
- 264: tête du pion
- 266: saillie annulaire
- 268: joint torique

## Revendications

1. Actionneur pour frein à tambour électromécanique, ledit frein à tambour comportant au moins deux organes de friction (3, 4) destinés à venir en contact avec un tambour solidaire en rotation de la roue, ledit actionneur (10) étant destiné à appliquer lesdits organes de friction (3, 4) contre ledit tambour, ledit actionneur (10) comportant un boîtier (12) s'étendant selon une direction longitudinale (X), au moins deux pistons (28, 30), chaque piston (28, 30) étant destiné à exercer un effort sur un organe de friction pour l'appliquer contre le tambour, lesdits pistons (28, 30) étant montés coulissant dans des passages traversants (32, 34) du boîtier le long de la direction longitudinale (Y), l'actionneur comportant également un système d'entraînement monté dans le boîtier (12) et destiné à écarter les pistons(28,30) l'un de l'autre lors d'une phase de freinage et à les rapprocher l'une de l'autre lors d'une phase de défreinage, ledit système d'entraînement comportant un ensemble vis-écrou et au moins un élément déformable élastiquement (40, 140, 240) monté préchargé entre deux pièces mobiles en translation l'une par rapport à l'autre le long de la direction longitudinale (Y), ledit système comportant des première (42, 142, 242) et deuxième faces d'extrémité longitudinales en regard chacune d'un premier (44, 244) et deuxième fond longitudinal du boîtier, **caractérisé en ce que** ledit système d'entraînement comporte des moyens d'interposition (I1, I2, I3) disposés de sorte à s'interposer entre le système d'entraînement et le premier fond (44, 244) longitudinal du boîtier, lesdits moyens d'interposition (I1, I2, I3) étant configurés pour qu'en fin de phase de défreinage, ils entrent en contact avec le premier fond longitudinal (44, 244) du boîtier et forment une butée élastique avec le premier fond longitudinal (44, 244) du boîtier.

2. Actionneur selon la revendication 1, dans lequel le système d'entraînement comporte un écrou (26, 126, 226), une vis (24) et un troisième élément (27), un manchon (50, 150) solidaire en rotation et en translation de l'écrou (26, 126, 226) et du troisième élément (27), l'élément déformable (40, 140, 240) élastiquement étant monté en réaction entre l'écrou (26, 126, 226) et le troisième élément (27) et dans lequel l'un des pistons est porté par l'écrou et l'autre piston est porté par le troisième élément.

3. Actionneur selon la revendication 1 ou 2, dans lequel les moyens d'interposition (I1, I2) exercent un effort s'opposant au déplacement du système d'entraînement, ledit effort étant orienté sensiblement transversalement à la direction longitudinale (Y).

4. Actionneur selon l'une des revendications 1 à 3, dans lequel les moyens d'interposition (I1, I2) comportent une extrémité longitudinale (46, 160.2) d'un organe déformable élastiquement en saillie de la première face d'extrémité (42, 142) du système d'entraînement, et dans lequel le premier fond longitudinal (44) comporte une face (48, 148) parallèle à la direction longitudinale (Y) contre laquelle l'extrémité longitudinale en saillie de l'organe déformable élastiquement est destinée à venir en contact en fin de phase de freinage.

5. Actionneur selon la revendication 4, dans lequel la première face d'extrémité (42, 142) du système d'entraînement comporte une fenêtre (50, 150) s'étendant angulairement, ladite fenêtre (50, 150) étant traversée par l'extrémité longitudinale (260.2) de l'organe déformable élastiquement, et dans lequel la fenêtre (50, 150) est délimitée angulairement par un premier bord et un deuxième bord, l'organe déformable élastiquement étant orienté de sorte qu'en fin de phase de freinage, lorsque l'extrémité longitudinale (46, 160.2) de l'organe déformable élastiquement est en contact avec la face (48, 248) du premier fond longitudinal (44), l'extrémité longitudinale (46, 160.2) de l'organe déformable élastiquement se déplace du premier bord vers le deuxième bord augmentant la charge de l'organe déformable élastiquement.

6. Actionneur selon la revendication 4 ou 5, dans lequel l'élément déformable élastiquement est un ressort hélicoïdal et forme l'organe déformable élastiquement, distinct de l'élément déformable.

7. Actionneur selon la revendication 4 ou 5, dans lequel l'organe déformable élastiquement est un deuxième ressort hélicoïdal (160) distinct de l'élément déformable élastiquement (40, 140) et est monté dans un logement formé dans l'écrou.

8. Actionneur selon la revendication 7, dans lequel le deuxième ressort hélicoïdal (160) est immobilisé en rotation dans l'écrou (126).

9. Actionneur selon la revendication 1 ou 2, dans lequel les moyens d'interposition (I3) exercent un effort s'opposant au déplacement du système d'entraînement, ledit effort étant orienté sensiblement selon la direction longitudinale (Y).

10. Actionneur 1, 2 ou 9, dans lequel les moyens d'interposition comportent au moins un pion (262) faisant saillie de la première face d'extrémité (242) du système d'entraînement et monté apte à coulisser dans ladite première face, ledit pion (262) étant monté en réaction contre un deuxième organe déformable élastiquement de sorte qu'une force de rappel s'exerce à l'encontre du pion (262) en direction de l'extérieur du système d'entrainement.

11. Actionneur selon la revendication 10, dans lequel le deuxième organe déformable élastiquement est formé par l'élément déformable élastiquement (240).

12. Frein à tambour comportant un tambour, un plateau (2), deux segments (3, 4), un moteur électrique (14), un actionneur selon l'une des revendications précédentes, dans lequel l'actionneur est fixé sur le plateau (2) et entrainé par le moteur électrique (14).

13. Frein à tambour selon la revendication 12, comportant une unité de commande (UC) comportant des moyens de commande de l'alimentation du moteur électrique (14) et des moyens pour mesurer la consommation électrique du moteur électrique (14), lesdits moyens de commande étant configurés pour arrêter l'alimentation du moteur électrique, lorsque la consommation électrique dépasse une valeur donnée au moins en phase de relâchement du frein.

14. Frein à tambour selon la revendication 13, dans lequel l'unité de commande est configurée pour arrêter le moteur électrique en cas de dépassement d'une valeur donnée de la consommation de courant au moins en phase de relâchement du frein.

15. Frein à tambour selon l'une des revendications 12 à 14, dans lequel l'actionneur (10) est configuré pour appliquer au moins un freinage de parking, et dans lequel le frein comporte un autre actionneur (6) pour appliquer un freinage de service.

## Patentansprüche

1. Stellglied für elektromechanische Trommelbremse, wobei die Trommelbremse mindestens zwei Reibglieder (3, 4) umfasst, die mit einer drehfest mit dem Rad verbundenen Trommel in Kontakt kommen sollen, wobei das Stellglied (10) die Reibglieder (3, 4) gegen die Trommel drücken soll, wobei das Stellglied (10) ein Gehäuse (12), das sich entlang einer Längsrichtung (X) erstreckt, mindestens zwei Kolben (28, 30), wobei jeder Kolben eine Kraft auf ein Reibglied ausüben soll, um es gegen die Trommel zu drücken, umfasst, wobei die Kolben (28, 30) verschiebbar in Querdurchgängen (32, 34) des Gehäuses entlang der Längsrichtung (Y) angebracht sind, wobei das Stellglied des Weiteren ein Antriebssystem umfasst, das in dem Gehäuse (12) angebracht ist und die Kolben (28, 30) während einer Bremsphase voneinander entfernen soll und sie während einer Bremslösephase einander annähern soll, wobei das Antriebssystem eine Schrauben/Mutter-Anordnung und mindestens ein elastisch verformbares Element (40, 140, 240) umfasst, das vorbelastet zwischen zwei entlang der Längsrichtung (Y) bezüglich einander translatorisch beweglichen Teilen angebracht ist, wobei das System erste (42, 142, 242) und zweite Längsendflächen, jeweils gegenüber einem ersten (44, 244) und zweiten Längsboden des Gehäuses umfasst, **dadurch gekennzeichnet, dass** das Antriebssystem Zwischenfügungsmittel (11, 12, 13) umfasst, die so angeordnet sind, dass sie zwischen dem Antriebssystem und dem ersten Längsboden (44, 244) des Gehäuses zwischengefügt werden, wobei die Zwischenfügungsmittel (11, 12, 13) so konfiguriert sind, dass sie am Ende der Bremslösephase mit dem ersten Längsboden (44, 244) des Gehäuses in Kontakt treten und mit dem ersten Längsboden (44, 244) des Gehäuses einen elastischen Anschlag bilden.

2. Stellglied nach Anspruch 1, wobei das Antriebssystem eine Mutter (26, 126, 226), eine Schraube (24) und ein drittes Element (27), eine Hülse (50, 150), die drehfest und translationsfest mit der Mutter (26, 126, 226) und dem dritten Element (27) verbunden ist, umfasst, wobei das elastisch verformbare Element (40, 140, 240) zwischen der Mutter (26, 126, 226) und dem dritten Element (27) reagierend angebracht ist, und wobei einer der Kolben von der Mutter getragen wird und der andere Kolben von dem dritten Element getragen wird.

3. Stellglied nach Anspruch 1 oder 2, wobei die Zwischenfügungsmittel (11, 12) eine Kraft ausüben, die der Verschiebung des Antriebssystems entgegenwirkt, wobei die Kraft im Wesentlichen quer zu der Längsrichtung (Y) ausgerichtet ist.

4. Stellglied nach einem der Ansprüche 1 bis 3, wobei die Zwischenfügungsmittel (11, 12) ein Längsende (46, 160.2) eines elastisch verformbaren Glieds umfassen, das von der ersten Endfläche (42, 142) des Antriebssystems vorsteht, und wobei der erste Längsboden (44) eine Fläche (48, 148) parallel zur Längsrichtung (Y) umfasst, gegen die das von dem elastisch verformbaren Glied vorstehende Längsende am Ende der Bremsphase in Kontakt kommen soll.

5. Stellglied nach Anspruch 4, wobei die erste Endfläche (42, 142) des Antriebssystems ein Fenster (50, 150) umfasst, das sich winkelförmig erstreckt, wobei das Fenster (50, 150) von dem Längsende (260.2) des elastisch verformbaren Glieds durchquert wird, und wobei das Fenster (50, 150) winkelförmig von einem ersten Rand und einem zweiten Rand begrenzt wird, wobei das elastisch verformbare Glied so ausgerichtet ist, dass am Ende der Bremsphase, wenn das Längsende (46, 160.2) des elastisch verformbaren Glieds mit der Fläche (48, 248) des ersten Längsbodens (44) in Kontakt ist, sich das Längsende (46, 160.2) des elastisch verformbaren Glieds von ersten Rand zum zweiten Rand verschiebt, wodurch die Belastung des elastisch verformbaren Glieds erhöht wird.

6. Stellglied nach Anspruch 4 oder 5, wobei das elastisch verformbare Element eine Schraubenfeder ist und das elastisch verformbare Glied bildet, das von dem verformbaren Element verschieden ist.

7. Stellglied nach Anspruch 4 oder 5, wobei das elastisch verformbare Glied eine zweite Schraubenfeder (160) ist, die von dem elastisch verformbaren Element (40, 140) verschieden ist und in einer in der Mutter ausgebildeten Aufnahme angebracht ist.

8. Stellglied nach Anspruch 7, wobei die zweite Schraubenfeder (160) in der Mutter (126) gegen Drehen gesichert ist.

9. Stellglied nach Anspruch 1 oder 2, wobei die Zwischenfügungsmittel (13) eine Kraft ausüben, die dem Verschieben des Antriebssystems entgegenwirkt, wobei die Kraft im Wesentlichen entlang der Längsrichtung (Y) ausgerichtet ist.

10. Stellglied 1, 2 oder 9, wobei die Zwischenfügungsmittel mindestens einen Zapfen (262) umfassen, der von der ersten Endfläche (242) des Antriebssystems hervorsteht und so angebracht ist, dass er in der ersten Fläche gleiten kann, wobei der Zapfen (262) so gegen ein zweites elastisch verformbares Glied reagierend angebracht ist, dass eine Rückholkraft entgegen dem Zapfen (262) in nach außen des Antriebssystems verlaufender Richtung wirkt.

11. Stellglied nach Anspruch 10, wobei das zweite elastisch verformbare Glied durch das elastisch verformbare Element (240) gebildet wird.

12. Trommelbremse, die eine Trommel, eine Platte (2), zwei Segmente (3, 4) einen Elektromotor (14), ein Stellglied nach einem der vorhergehenden Ansprüche umfasst, wobei das Stellglied an der Platte (2) befestigt ist und von dem Elektromotor (14) angetrieben wird.

13. Trommelbremse nach Anspruch 12, die eine Steuereinheit (STE) umfasst, die Mittel zur Steuerung und zur Versorgung des Elektromotors (14) und Mittel zur Messung des Energieverbrauchs des Elektromotors (14) umfasst, wobei die Steuermittel dazu konfiguriert sind, die Versorgung des Elektromotors anzuhalten, wenn der Energieverbrauch zumindest während der Lösephase der Bremse einen gegebenen Wert übersteigt.

14. Trommelbremse nach Anspruch 13, wobei die Steuereinheit dazu konfiguriert ist, bei Übersteigen eines gegebenen Werts des Stromverbrauchs zumindest während der Lösephase der Bremse den Elektromotor anzuhalten.

15. Trommelbremse nach einem der Ansprüche 12 bis 14, wobei das Stellglied (10) dazu konfiguriert ist, mindestens eine Parkbremsung durchzuführen, und wobei die Bremse ein anderes Stellglied (6) zum Durchführen einer Betriebsbremsung umfasst.

## Claims

1. An actuator for an electromechanical drum brake, said drum brake including at least two friction members (3, 4) intended to come into contact with a drum secured in rotation to the wheel, said actuator (10) being intended to apply said friction members (3, 4) against said drum, said actuator (10) including a case (12) extending according to a longitudinal direction (X), at least two pistons (28, 30), each piston (28, 30) being intended to exert a force on a friction member to apply it against the drum, said pistons (28, 30) being slidably mounted in through passages (32, 34) of the case along the longitudinal direction (Y), the actuator also including a drive system mounted in the case (12) and intended to bring the pistons (28, 30) away from each other during a braking phase and to bring them close to each other during a brake release phase, said drive system including a screw-nut set and at least one elastically-deformable element (40, 140, 240) mounted preloaded between two parts movable in translation relative to each other along the longitudinal direction (Y), said system including first (42, 142, 242) and second longitudinal end faces each opposite first (44, 244) and second longitudinal bottoms of the case, **characterised in that** said drive system includes interposing means (I1, 12, 13) disposed so as to be interposed between the drive system and the first longitudinal bottom (44, 244) of the case, said interposing means (I1, 12, 13) being configured so that at the end of the brake release phase, they come into contact with the first longitudinal bottom (44, 244) of the case and form an elastic stop with the first longitudinal bottom (44, 244) of the case.

2. The actuator according to claim 1, wherein the drive system includes a nut (26, 126, 226), a screw (24) and a third element (27), a sleeve (50, 150) secured in rotation and in translation to the nut (26, 126, 226) and to the third element (27), the elastically-deformable element (40, 140, 240) being mounted in reaction between the nut (26, 126, 226) and the third element (27) and wherein one of the pistons is carried by the nut and the other piston is carried by the third element.

3. The actuator according to claim 1 or 2, wherein the interposing means (I1, 12) exert a force resisting the movement of the drive system, said force being directed substantially transversely to the longitudinal direction (Y).

4. The actuator according to one of claims 1 to 3, wherein the interposing means (I1, 12) include a longitudinal end (46, 160.2) of an elastically-deformable member projecting from the first end face (42, 142) of the drive system, and wherein the first longitudinal bottom (44) includes a face (48, 148) parallel to the longitudinal direction (Y) against which the longitudinal end projecting from the elastically-deformable member is intended to come into contact at the end of the braking phase.

5. The actuator according to claim 4, wherein the first end face (42, 142) of the drive system includes an aperture (50, 150) extending angularly, said aperture (50, 150) being crossed by the longitudinal end (260.2) of the elastically-deformable member, and wherein the aperture (50, 150) is angularly delimited by a first edge and a second edge, the elastically-deformable member being directed so that at the end of the braking phase, when the longitudinal end (46, 160.2) of the elastically-deformable member is in contact with the face (48, 248) of the first longitudinal bottom (44), the longitudinal end (46, 160.2) of the elastically-deformable member moves from the first edge towards the second edge thereby increasing the load of the elastically-deformable member.

6. The actuator according to claim 4 or 5, wherein the elastically-deformable element is a helical spring and forms the elastically-deformable member, distinct from the deformable element.

7. The actuator according to claim 4 or 5, wherein the elastically-deformable member is a second helical spring (160) distinct from the elastically-deformable element (40, 140) and is mounted in a housing formed in the nut.

8. The actuator according to claim 7, wherein the second helical spring (160) is immobilised in rotation in the nut (126).

9. The actuator according to claim 1 or 2, wherein the interposing means (13) exert a force resisting the movement of the drive system, said force being directed substantially according to the longitudinal direction (Y).

10. The actuator 1, 2 or 9, wherein the interposing means include at least one pin (262) projecting from the first end face (242) of the drive system and mounted so as to be able to slide within said first face, said pin (262) being mounted in reaction against a second elastically-deformable member so that a biasing force is exerted against the pin (262) outwardly from the drive system.

11. The actuator according to claim 10, wherein the second elastically-deformable member is formed by the elastically-deformable element (240).

12. A drum brake including a drum, a back plate (2), two brake shoes (3, 4), an electric motor (14), an actuator according to one of the preceding claims, wherein the actuator is fastened on the back plate (2) and driven by the electric motor (14).

13. The drum brake according to claim 12, including a control unit (UC) including means for controlling the power supply of the electric motor (14) and means for measuring the electric consumption of the electric motor (14), said control means being configured so as to stop the power supply of the electric motor, when the electric consumption exceeds a given value at least during the brake release phase.

14. The drum brake according to claim 13, wherein the control unit is configured so as to stop the electric motor when a given value of the current consumption is exceeded at least during the brake release phase.

15. The drum brake according to one of claims 12 to 14, wherein the actuator (10) is configured so as to apply at least one parking brake, and wherein the brake includes another actuator (6) to apply a service brake.
